Europäisches Patentamt

European Patent Office

Office européen des brevets

(19)

(11) Publication number: **0 071 484**
**A1**

(12)

# EUROPEAN PATENT APPLICATION

(21) Application number: 82304029.0

(22) Date of filing: 30.07.82

(51) Int. Cl.³: **H 02 H 9/08**

(30) Priority: 30.07.81 JP 119762/81

(43) Date of publication of application:
09.02.83 Bulletin 83/6

(84) Designated Contracting States:
CH DE GB LI SE

(71) Applicant: TOKYO SHIBAURA DENKI KABUSHIKI
KAISHA
72, Horikawa-cho Saiwai-ku
Kawasaki-shi Kanagawa-ken 210(JP)

(72) Inventor: Ogawa, Yasuhiro Patent Div. Tokyo Shibaura
Denki K.K. 72, Horikawa-cho Saiwai-ku
Kawasaki-shi Kanagawa-ken Tokyo(JP)

(72) Inventor: Fukui, Isao Patent Div. Tokyo Shibaura
Denki K.K. 72, Horikawa-cho Saiwai-ku
Kawasaki-shi Kanagawa-ken Tokyo(JP)

(74) Representative: Kirk, Geoffrey Thomas et al,
BATCHELLOR, KIRK & EYLES 2 Pear Tree Court
Farringdon Road
London EC1R 0DS(GB)

(54) A secondary arc extinction device.

(57) A secondary arc extension device in an electric power
system including a bus bar; an electric power line connected
to the bus bar; protective relaying means connected to the
bus bar; reactance means provided with each phase, each
one terminal of the first reactance means being connected to
a respective electric power line; a transformer (TR) having a
primary winding and a secondary winding the primary
winding being connected between each of the other termin-
als of the first reactance means and ground; second
reactance (Lg) means connected to the secondary winding;
and means (THY) for controlling the reactance of the second
reactance means in response to the protective relaying
means.

FIG.5.

## "A Secondary Arc Extinction Device"

The present invention relates to a secondary arc extinction device in a multi-conductor transmission line electric power system in which there is strong electrostatic coupling between the lines which cause problems in operation.

The main problems caused by electrostatic coupling are that the arc generated by back flashover at the transmission line insulators (which is hereinafter referred to as "secondary arc") may not be extinguished to disable the reclosing at a high speed or that it is impossible to obtain a sufficient period of time during which the voltage is zero because induced current or voltage is supplied from the whole phase or the whole line, due to the electrostatic coupling, even after the circuit breakers at both ends of the transmission line are interruped when a short circuit is caused by lightning at the insulator.

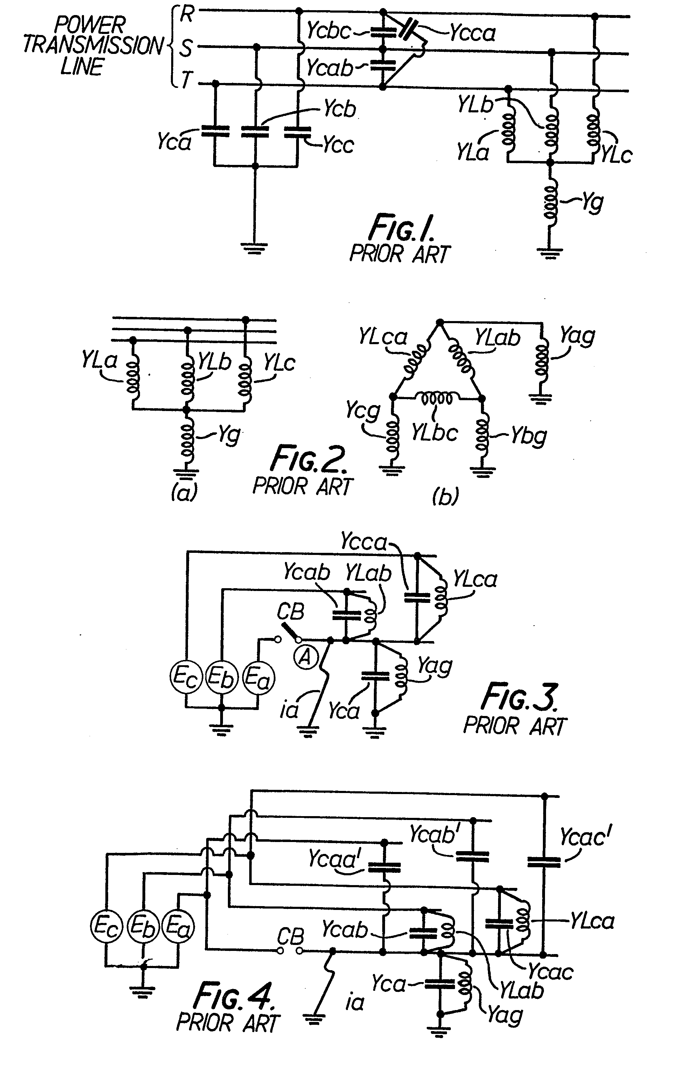

Figures 1, 2a, 2b, 3 and 4 show a conventional electric power transmission line system having R, S and T phases. A fixed reactor with zero phase, i.e. a reactor between the neutral point of the star-connection and ground, provides compensation as shown in Figure 1. The notation in Figure 1 is as follows:

| | | | | |
|---|---|---|---|---|
| $Y_{ca}$ | : | a-phase | : line-to-ground admittance | |
| $Y_{cb}$ | : | b-phase | " | " |
| $Y_{cc}$ | : | c-phase | " | " |
| $Y_{cab}$ | : | a-b phase | " | " |
| $Y_{cbc}$ | : | b-c phase | " | " |
| $Y_{cca}$ | : | c-a phase | " | " |

$L_a$      :   reactor a phase reactance

$L_b$      :      "      b phase      "

$L_c$      :      "      c phase      "

$L_g$      :   neutral point reactor reactance

$Y_{La}$     :   1/   . La   :   reactor a phase admit-
                                    tance

$Y_{Lb}$     :   1/   . Lb   :      "      b phase      "

$Y_{Lc}$     :   1/   . Lc   :      "      c phase      "

$Y_g$      :   1/   . Lg   :   neutral point reactor
                                    admittance

The zero phase compensation reactor which is shown in Figure 2a can be resolved into components between lines, as well as ground components as shown in Figure 2b. In Figure 2b, if it is assumed that m = $Y_{La}$ + $Y_{Lb}$ + $Y_{Lc}$ + $Y_g$, each admittance will be obtained as the following:

$$Y_{Lab} = Y_{La} \cdot Y_{Lb}/m$$
$$Y_{Lbc} = Y_{Lb} \cdot Y_{Lc}/m$$
$$Y_{Lca} = Y_{Lc} \cdot Y_{La}/m$$
$$Y_{ag} = Y_a \cdot Y_g/m$$
$$Y_{bg} = Y_b \cdot Y_g/m$$
$$Y_{cg} = Y_c \cdot Y_g/m$$

Figure 3 shows the condition in which the a phase circuit breaker CB is opened after an a phase ground short-circuit problem has occurred. Then, an induced electric current $i_a$ flows into the problem point A from the unaffected phases b and c by way of $Y_{cab}$ and $Y_{cca}$. In addition, the level of the recovery voltage $v_r$ and the secondary arc current $i_a$ maintaining the secondary arc is dependent upon such factors as the weather conditions, the primary arc current, the time, and the design of the line insulator. In other words, it is possible to extinguish the secondary arc if it is possible to limit the secondary arc current and the recovery voltage in a range which either the recovery voltage $v_r$ or the secondary arc urrent $i_a$ is small.

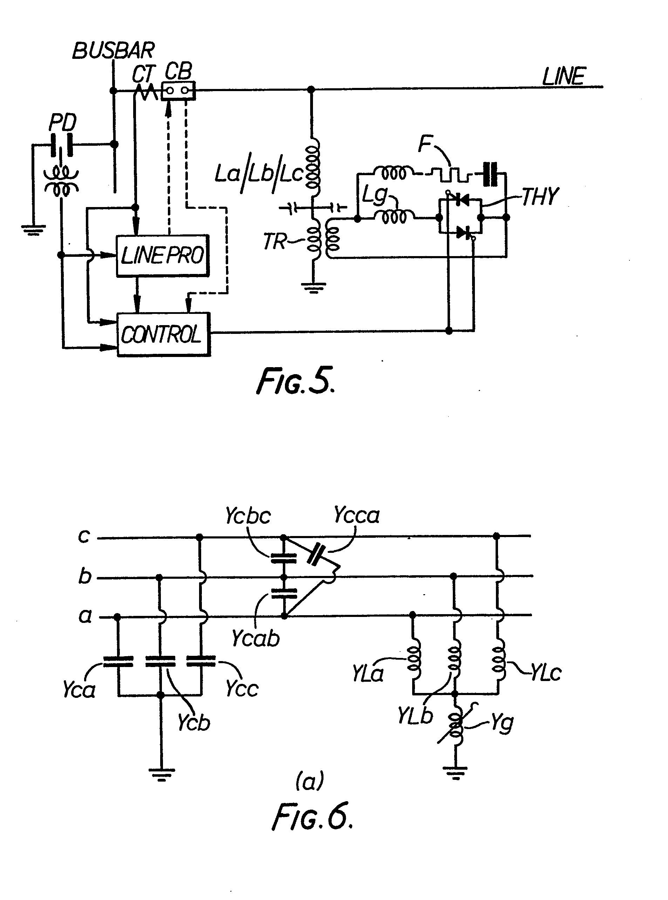

Similarly, induction via the power transmission line phas ground admittances $Y_{caa}$, $Y_{cab}$, and $Y_{cac}$, from the unaffected transmission line also occurs in the case of a juxtaposed pair of transmission lines as shown in Figure 4, but it is difficult to compensate for the capacitance between the lines with the reactor which is constituted as shown in Figure 1.

Accordingly, the present invention seeks to provide a secondary arc extinction device in an electric power system in which it is possible to shorten the period of time required for extinction of secondary arcs however caused.

The invention also seeks to provide an improved power transmission system, especially a UHV system, provided with active countermeasures for the extinction of secondary arcs.

Accordingly the invention provides a secondary arc extinction device for an electric power system including a neutral point reactor circuit whose reactance is continuously variable by means thyristor phase control and which is connected between the neutral point of the star-connection and ground. The reactance value of the neutral point reactor is thus capable of being controlled to the optimum reactance value for extinction of

-4-

secondary arcs. In contrast to the conventional system including a fixed reactor with zero phase compensation, in which high-speed multi-phase circuit reclosing is carried out with no countermeasure against arcing, the present invention provides an active countermeasure for extinction of secondary arcs in UHV power transmission system.

In one preferred embodiment of this invention, a secondary arc extinction device for an electric power system includes a bus bar; an electric power line connected to the bus bar; first reactance means for each phase, one terminal of each first reactance means being connected to respective electric power line; a transformer having a primary winding and a secondary winding, the primary windidng being connected between the other terminal of each said first reactance means and ground; second reactance means connected to the secondary winding of the transformer; and means for controlling the reactance of the second reactance means in response to a protective relay device.

Some embodiments of the invention will now be described by way of example with reference to the accompanying drawings wherein:

Figure 1 is a circuit diagram of a conventional electric power transmission line having a fixed reactor with zero phase compensation;

Figures 2a and 2b are respectively circuit diagrams of a part of Figure 1 and an equivalent circuit of a portion of the circuit of Figure 2a;

Figure 3 is a diagram illustrating the occurrence of an a phase ground short-circuit in a conventional electric power transmission line;

Figure 4 is a diagram illustrating the occurrence of an a phase ground short-circuit in a conventional juxtaposed multi-line power transmission system;

Figure 5 is a circuit diagram showing one embodiment of secondary arc extinction device in accordance with the present invention;

Figures 6a and 6b are circuit diagrams of electric power transmission lines employing the system of the present invention; and

Figure 7 is a block diagram of one embodiment of a control device shown in Figure 5.

In a circuit of the kind shown in Figure 3 having a reactor with zero phase compensation, the period of time for extinction of the secondary arc is shortened by producing parallel resonance in the circuits of $Y_{cca}$ and $Y_{Lca}$, $Y_{cab}$ and $Y_{Lab}$ respectively so that the impedance becomes infinite. Thus the electric current between the (A) point and ground and the recovery voltage, are reduces to zero, or reduced to a very low level. In other words, it is possible to reduce both the secondary arc current and the recovery voltage in one line of the transmission line of one line by choosing the reactance of the reactor in such a way that parallel resonance occurs between the inter-line capacitance, and the reactance.

The continuous control of the reactive power also provides continuous control of the reactance value, by means of thyristor phase control.

Figure 5 shows an example of a secondary arc extinction device in an electric power system in accordance with the present invention. In Figure 5, there is provided a thyristor phase control reactor with zero phase compensation in an electricity distribution substation, connection station, or the like, between the bus bar and the line. This reactor is collectively capable of varying the reactance value of the neutral point in a continuous manner by means of thyristor phase control.

A protective relay LINE PRO generates a trip signal (dotted line) in a known fashion to be transmitted to a circuit breaker CB in response to outputs from a current transformer CT and a potential transformer PD when a ground fault occurs in a range to be protected.

As described above with reference to Figures 1 and 2, the terminals of a star-connection phase reactor are connected to each phase line (only one phase is shown in Figure 5 for the sake of brevity). The primary winding of a transformer TR is connected between the neutral point of the star-connection phase reactor and ground.

The secondary winding of the transformer TR is connected to a series connection of a neutral point reactor $L_g$ and anti-parallel connected thyristors THY and a filter F.

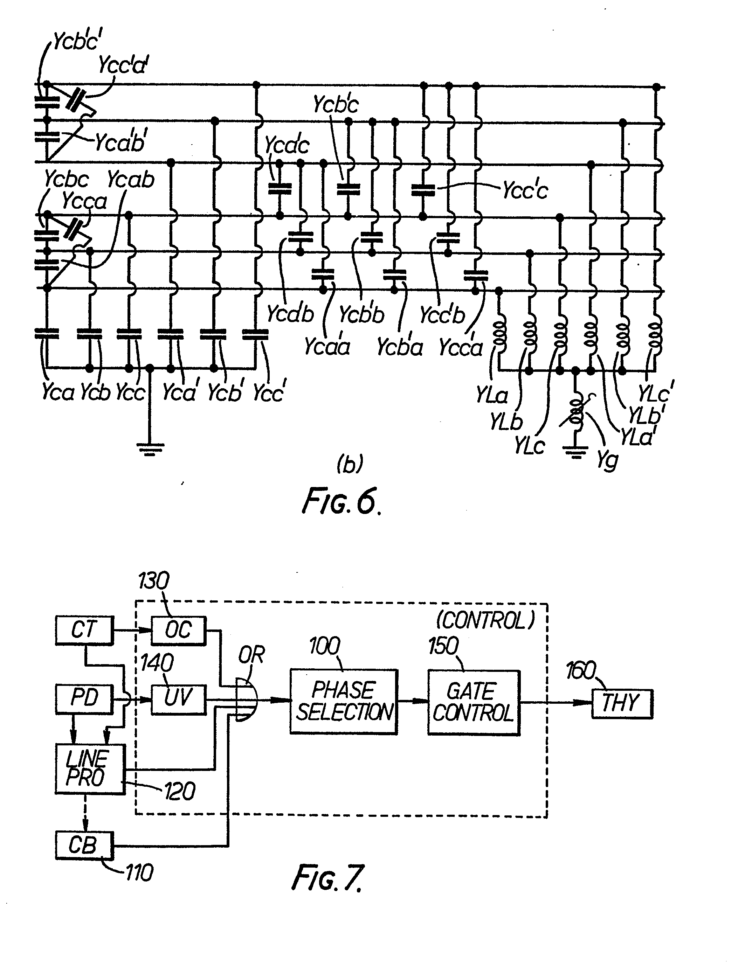

A control device CONTROL receives outputs from the current transformer CT, the potential PD, the protective relay LINE PRO and an auxiliary contact (b contact) of circuit breaker CB. Control device CONTROL generates a signal to change the conduction angle of thyristor THY to a predetermined value when a fault occurs, as described in more detail below with reference to Figure 7.

When a fault occurs, the reactance of the neutral point transformer TR is controlled by the thyristor THY so as to change the reactance to a predetermined-value.

As a result, is is possible to arrange that parallel resonance occurs between the capacitance between the lines and the controlled reactance between the lines.

For example, the thyristor phase control reactor with zero phase compensation may be arranged in such a way that only the interphase capacitance of its own line is compensated for as shown in Figure 6c or in such a way that the capacitance between the lines is also compensated for as shown in Figure 6b.

Figure 7 is a block diagram of one form of the above mentioned control means ("CONTROL") in accordance with which the affected phase is identified by a phase selection circuit 100 by detecting the operative condition of the circuit breaker 110 or the operative condition of the protective relay 120 of a line or an affected phase selection relay such as over current relay 130, undervoltage relay 140 or the like. The gate ignition angle of the thyristor THY is determined by the gate control circuit 150 so as to transmit an ignition signal to the thyristor 160. Now, if a gate ignition angle is set in advance which corresponds with the value of the neutral point resistance which is most suitable for compensating for the interphase capacitance or the capacitance between the lines in accordance with the condition of the affected phase, it becomes possible to rapidly respond in determining the ignition angle of the thyristor gate by means of the gate control circuit 150.

Thus, the preferred form of the secondary arc extinction device of the invention in an electric power system is so constructed that the affected phase is identified by a trip signal condition of a protective relay for a line or by the operative condition of an overcurrent or undervoltage, relay or the operative condition (<u>b</u> contact) of a circuit breaker CB, and a reactance value of neutral point is controlled to a predetermined value so as to match the parallel resonance condition above-described.

In this way it is possible to reduce the period of time for extinction of the secondary arc in the power transmission system and furthermore, reclosing of the circuit is also made possible if the means for extinction of secondary arc as mentioned above is employed. Although it is normally impossible to gather together the reactors for reactive power control of the system at the service entrance of the line in the case of an arrangement having reactor of fixed values it becomes possible to do so in accordance with the device of this invention because the reactance value is made variable. In addition, it is possible to construct a circuit including a combination of a thyristor phase control reactor and a circuit breaker switching control capacitor, in other words, to combine the circuit with the capacitor equipment. Therefore, it is possible to arrange the reactive power control means in such a way as to be gathered together at the service entrance of the line, and it can then be put into use when disturbances occur on the line, so as to shorten the period of time required for extinction of the secondary arc. In addition, since it is possible to use the floating capacitance or the line as the advance capacitance by controlling the reactor current, it becomes possible for the substation as a whole to require fewer capacitors, and thus be cheaper to construct.

Furthermore, it is possible to provide a compact secondary arc extinction device as a whole because only one thyristor phase control reactor is required at the neutral point between the neutral point of the star-connection phase reactor and ground. Thus the secondary arc extinction device constructed in accordance with this invention has an economic advantage due to reduction of a number of parts.

## CLAIMS

1.      A secondary arc extinction device in a multi-phase electric power system comprising: protective relay means adapted for connection to the bus bar of an electric power line, and first reactance means provided for each phase, one terminal of each said first reactance means being connected to respective phases of the electric power line and the other terminals of the respective reactors being connected together in a star connection, characterised by a transformer having a primary winding and a secondary winding, said primary winding being connected between the neutral points of the star connection, second reactance means connected to said secondary winding of said transformer; and means for controlling the reactance of said second reactance means in response to the actuated condition of said protective relay means.

2.      A secondary arc extinction device as claimed in claim 1, wherein said second reactance means comprises semiconductor switching means and a reactor connected in series therewith.

3.      A secoandary arc extinction device as claimed in claim 2, wherein said semiconductor switching means comprises anti-parallel connected thyristors.

4.      A secondary arc extinctiond device as claimed in any preceding claim, further comprising a filter connected to the secondary winding of said transformer.

-11-

5. A secondary arc extinction device as claimed in claim 3, further comprising a current transformer adapted for connection to said bus bar; a potential transformer adapted for connection to said bus bar; a circuit breaker having an auxiliary contact for connection between said bus bar and said electric power line for activating said protective relay means; an OR gate having inputs connected to said current transformer, said potential transformer, said protective relay means and said auxiliary contact of circuit breaker; and means for setting the firing angle of said thyristors of said second reactance means to a predetermined value in response to the output of said OR gate.

1/3

POWER
TRANSMISSION
LINE

**FIG. 1.**
PRIOR ART

**FIG. 2.**
PRIOR ART

(a)

(b)

**FIG. 3.**
PRIOR ART

**FIG. 4.**
PRIOR ART

FIG.5.

(a)

FIG.6.

Ycb'c'

Ycc'a'

Ycab'

Ycbc  Ycab

Ycca

Ycb'c

Ycdc

Ycc'c

Ycdb  Ycb'b  Ycc'b

Ycaa  Ycba  Ycca

Yca Ycb Ycc  Yca' Ycb' Ycc'

YLa  YLc'
YLb  YLb'
YLc  YLa'
Yg

(b)

FIG. 6.

CT → OC (130)

PD → UV (140)

LINE PRO (120)

CB (110)

OR

PHASE SELECTION (100) → GATE CONTROL (150) → THY (160)

(CONTROL)

FIG. 7.

European Patent
Office ·

**EUROPEAN SEARCH REPORT**

EP 82 30 4029.0

| | **DOCUMENTS CONSIDERED TO BE RELEVANT** | | | **CLASSIFICATION OF THE APPLICATION (Int. Cl. ³)** |
|---|---|---|---|---|
| Category | Citation of document with indication, where appropriate, of relevant passages | | Relevant to claim | |
| X | "Soviet Inventions Illustrated" Week C 30, 3 September 1980 Section X 13 | | 1-3 | H 02 H 9/08 |
| Y | & SU - A - 702 447 | | 5 | |
| Y | "Soviet Inventions Illustrated" Week C 15, 21 May 1980 Sections R 51, R 53 & SU - A - 672 700 | | 5 | |
| | | | | **TECHNICAL FIELDS SEARCHED (Int.Cl. ³)** |
| | | | | H 02 H 9/08 H 02 J 3/18 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | | |
|---|---|---|---|
| The present search report has been drawn up for all claims | | | |
| Place of search Berlin | Date of completion of the search 06-10-1982 | Examiner LEMMERICH | |